# EUROPEAN PATENT APPLICATION

(11) **EP 4 749 356 A1**
(43) Date of publication of application: **27.05.2026**
(21) Application number: 25218414.8
(22) Date of filing: 25.11.2025
(51) Int. Cl.: G02F 1/155

(54) **DUAL-CONDUCTIVE-LAYER ELECTRODE AND ELECTROCHROMIC DEVICE**

(30) Priority: 25.11.2024 CN 202411686407; 12.09.2025 US 202519327151
(71) Applicant: LannRay Advanced Materials Co. Ltd, Yinzhou District Ningbo City 315048 (CN)
(72) Inventor: WANG, Guangming, Huntington Beach CA 92647 (US); LI, Miaozi, Yangzhong City Jiangsu Province 212200 (CN); ZHOU, Yan, Fremont CA 94025 (US); WANG, Jian, Fremont CA 94536 (US); CHEN, Zhao, Camarillo CA 93012 (US)
(74) Representative: Marks & Clerk LLP

(57) **Abstract**

An electrochromic apparatus is disclosed, including a pair of transparent conductive layers respectively disposed on upper and lower sides of an electrochromic device. A charge storage layer, an electrolyte layer, and an electrochromic layer are positioned between the transparent conductive layers and arranged sequentially. The device further includes a dual-conductive-layer electrode positioned along one or more peripheral edges and electrically connected to both transparent conductive layers. The dual-conductive-layer electrode comprises an insulating layer centrally positioned between a pair of metallic conductive layers, which are disposed respectively on upper and lower sides of the insulating layer to prevent short-circuiting.

## Description

### TECHNICAL FIELD

This application claims priority to Chinese Patent Application No. CN 202411686407.4, filed on November 25, 2024. The entire content of the above-identified application is incorporated herein by reference.

### TECHNICAL FIELD

The present invention relates to the field of electrochromism, and more particularly to a novel dual-conductive-layer electrode and an electrochromic device.

### BACKGROUND

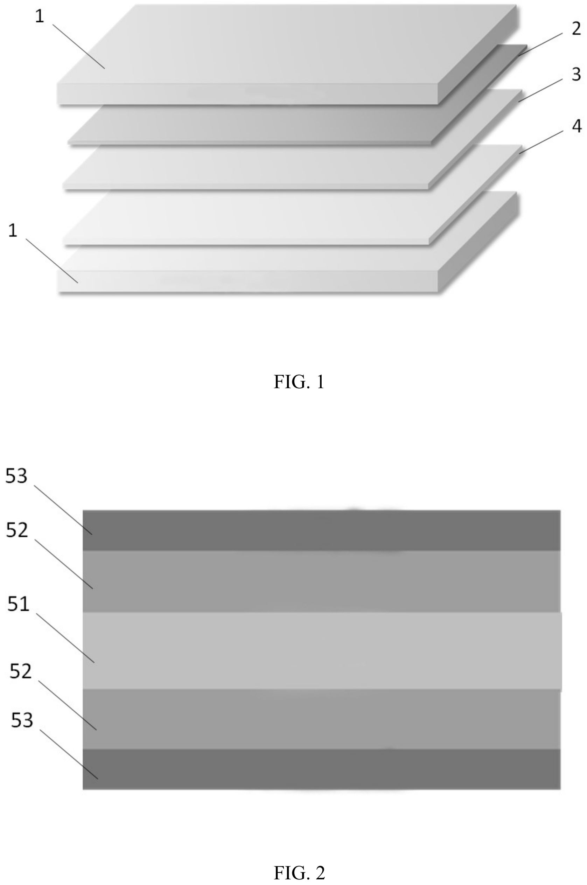

The transparent conductive layer of electrochromic devices is generally composed of conductive metal oxides, such as ITO (Indium Tin Oxide) and IZO (Indium Zinc Oxide), with surface resistances ranging from 1 Ω/m² (ohms per square) to 500 Ω/m². When the size of the electrochromic device increases, the resistance of the transparent conductive layer impacts the current injection, resulting in slow color-changing speeds and uneven coloration of the device. To address the issue of current injection, high-conductivity metal electrodes, such as metallic wires or metal conductive strips (e.g., copper foil, aluminum foil), need to be arranged at the edges of the device. FIG. 2 shows a sectional view of a traditional metal electrode structure. Its structure is simple, including a single conductive layer. To adhere to the transparent conductive layer of the electrochromic device, one or both sides of the single conductive layer are coated with conductive adhesive. Electrodes with a single conductive layer are collectively referred to as single-layer conductive electrodes.

Due to the significant difference in conductivity between the metallic single-layer conductive electrodes at the edges of the transparent conductive layer of the electrochromic device and the transparent conductive layer itself, the commonly used "L"-shaped or "grid"-shaped traditional wiring methods for single-layer conductive electrodes encounter several issues. For instance, the metallic single-layer conductive electrodes at the edges of the upper and lower transparent conductive layers are connected via the upper and lower transparent conductive layers, which have relatively high resistance, to form the circuit of the electrochromic device. Because the metallic electrodes of the upper and lower transparent conductive layers are positioned relatively far apart (except at the corners of the electrochromic device), the increased resistance between them affects the current input, leading to significantly different electrochromic speeds at various locations. These issues are particularly pronounced in electrochromic devices with larger surface areas.

### SUMMARY

The primary objective of the present invention is to propose a novel dual-conductive-layer electrode and an electrochromic device to overcome the aforementioned technical problems.

To achieve the above objective, the invention provides the following technical solution:
an electrochromic device including:
a transparent conductive layer disposed on both an upper side and a lower side of the electrochromic device;
a charge storage layer, an electrolyte layer, and an electrochromic layer, positioned between two transparent conductive layers and arranged sequentially from top to bottom; and
a novel dual-conductive-layer electrode positioned at peripheral edges of the electrochromic device and connected to the transparent conductive layer;
wherein the novel dual-conductive-layer electrode includes an insulating layer and a metallic conductive layer, wherein the insulating layer is positioned at a central-most portion of the novel dual-conductive-layer electrode to provide insulation; and the metallic conductive layer is disposed on both the upper side and the lower side of the insulating layer.

Furthermore, each of the metallic conductive layers has a side facing away from the other, and each of these sides is covered with a metallic conductive adhesive.

Furthermore, a conductive surface of the transparent conductive layer on the upper side of the electrochromic device faces downward, and a conductive surface of the transparent conductive layer on the lower side of the electrochromic device faces upward.

Furthermore, at least one edge of the transparent conductive layer is configured in a sawtooth pattern at the portion in contact with the novel dual-conductive-layer electrode making intermittent contact with the novel dual-conductive-layer electrode.

Furthermore, the sawtooth patterns on the same side of the upper and lower transparent conductive layers are arranged in an interleaved configuration.

Furthermore, the sawtooth patterns on the same side of the upper and lower transparent conductive layers are arranged in an overlapping configuration.

Furthermore, the sawtooth edges on the same side of the upper and lower transparent conductive layers are partially overlapped.

Furthermore, a material of the transparent conductive layer includes, but is not limited to, indium tin oxide (ITO) and indium zinc oxide (IZO).

Through the novel dual-conductive-layer electrode and electrochromic device provided by the present invention, the issue caused by the relatively large distance between the metallic electrodes of the upper and lower transparent conductive layers (except at the corners of the electrochromic device), which increases resistance and affects current input, leading to significantly varying electrochromic speeds at different locations, is effectively resolved. This invention greatly enhances the response speed of electrochromism and improves the uniformity of the electrochromic performance.

### BRIEF DESCRIPTION OF THE DRAWINGS

The drawings that form part of this application are provided to further facilitate understanding of the present invention. The illustrative embodiments and their descriptions are provided to explain the invention and are not intended to impose improper limitations on its scope. In the drawings:
**FIG. 1** illustrates a schematic diagram of the structure of an electrochromic device according to the present invention.
**FIG. 2** illustrates a top view of the structure of the novel dual-conductive-layer electrode and the electrochromic device according to the present invention.
**FIG. 3** illustrates a schematic diagram of the connection between the novel dual-conductive-layer electrode and the upper and lower transparent electrodes of the electrochromic device.
**FIG. 4** illustrates a schematic diagram of the segmented edges of the upper and lower transparent conductive layers.
**FIG. 5** illustrates a schematic diagram of a structure where the segmented edges of the upper and lower transparent conductive layers are completely non-overlapping.
**FIG. 6** illustrates a schematic diagram of a structure where the segmented edges of the upper and lower transparent conductive layers are interleaved but non-overlapping.
**FIG. 7** illustrates the distribution of the novel dual-conductive-layer electrode when the segmented edges of the upper and lower transparent conductive layers are interleaved and non-overlapping.
**FIG. 8** illustrates a schematic diagram of a structure where the upper and lower transparent conductive layers are completely overlapping and have no segmented edges.
**FIG. 9** illustrates the distribution of the novel dual-conductive-layer electrode when the upper and lower transparent conductive layers are completely overlapping and have no segmented edges.
**FIG. 10** illustrates a schematic diagram of a structure where the segmented edges of the upper and lower transparent conductive layers are completely overlapping.
**FIG. 11** illustrates the distribution of the novel dual-conductive-layer electrode when the segmented edges of the upper and lower transparent conductive layers are completely overlapping.
**FIG. 12** illustrates a schematic diagram of a structure where the segmented edges of the upper and lower transparent conductive layers are partially overlapping.
**FIG. 13** illustrates the distribution of the novel dual-conductive-layer electrode when the segmented edges of the upper and lower transparent conductive layers are partially overlapping.

The aforementioned drawings include the following reference numerals:
1: transparent conductive layer; 2: charge storage layer; 3: electrolyte layer; 4: electrochromic layer; 5: novel dual-conductive-layer electrode; 51: insulating layer; 52: metallic conductive layer; 53: metallic conductive adhesive.

### DETAIL DESCRIPTION OF THE EMBODIMENTS

The technical solutions of the embodiments of the present invention will be clearly and thoroughly described below in conjunction with the accompanying drawings of the embodiments. It is evident that the described embodiments are merely a portion of the embodiments of the present invention, rather than all of them. The following description of at least one exemplary embodiment is merely illustrative and in no way constitutes any limitation on the present invention or its applications and uses. Based on the embodiments of the present invention, all other embodiments obtained by those skilled in the art without involving inventive labor fall within the scope of protection of the present invention.

It should be noted that the terminology used herein is intended solely to describe specific embodiments and is not intended to limit the exemplary embodiments of this application. As used herein, unless the context clearly indicates otherwise, the singular forms are intended to include the plural forms as well. Furthermore, it should be understood that when the terms "comprise" and/or "include" are used in this specification, they indicate the presence of features, steps, operations, devices, components, and/or combinations thereof.

Unless otherwise specifically stated, the relative arrangement of components and steps, numerical expressions, and numerical values described in these embodiments do not limit the scope of the present invention. It should also be understood that, for ease of description, the dimensions of the various parts shown in the accompanying drawings are not drawn to actual proportional scale. Techniques, methods, and devices known to those of ordinary skill in the relevant art may not be discussed in detail but should be considered as part of the specification where appropriate. In all examples shown and discussed herein, any specific values should be interpreted as illustrative only and not as limiting. Accordingly, other examples of the exemplary embodiments may have different values. It should be noted that similar reference numerals and letters in the following drawings indicate similar items, and once an item is defined in one figure, further discussion of that item in subsequent figures may not be necessary.

Below, with reference to FIGs. 1 to 13, the present invention is further described:
a novel dual-conductive-layer electrode including:
insulating layer 51, positioned at the central portion of the novel dual-conductive-layer electrode 5 to provide an insulating function;
metallic conductive layer 52, covering the upper and lower sides of the insulating layer 51.

The outer sides of the upper and lower metallic conductive layers 52 are both coated with metallic conductive adhesive 53.

An electrochromic device including:
a transparent conductive layer 1, disposed on both an upper side and a lower side of the electrochromic device;
a charge storage layer 2, an electrolyte layer 3, and an electrochromic layer 4, positioned between two transparent conductive layers 1 and arranged sequentially from top to bottom; and
a novel dual-conductive-layer electrode 5, positioned at the peripheral edges of the electrochromic device and connected to the transparent conductive layers 1.

The novel dual-conductive-layer electrode 5 includes two metallic conductive layers 52 separated by an insulating layer 51 in the middle to prevent short-circuiting between the two metallic conductive layers 52. To enable the novel dual-conductive-layer electrode 5 to be securely attached to the transparent conductive layer 1 of the electrochromic device, one or both sides of the novel dual-conductive-layer electrode 5 are coated with conductive adhesive. Electrodes with two conductive layers are collectively referred to as the novel dual-conductive-layer electrode 5.

The conductive surface of the transparent conductive layer 1 on the upper side of the electrochromic device faces downward, while the conductive surface of the transparent conductive layer 1 on the lower side faces upward.

The novel dual-conductive-layer electrode 5 can simultaneously contact the edges of both the upper and lower transparent conductive layers 1 of the electrochromic device without requiring disconnection. Compared to the existing single-conductive-layer electrodes, this significantly reduces wiring complexity, saves wiring time, and improves production efficiency.

In the electrochromic device, the use of the novel dual-conductive-layer electrode 5 simplifies the wiring method. Taking one edge of the electrochromic device as an example, the edges of the upper and lower transparent conductive layers 1 are in direct contact with the novel dual-conductive-layer electrode 5, respectively forming the positive and negative electrodes of the device (upper and lower transparent conductive layers). The upper metallic conductive layer 52 of the novel dual-conductive-layer electrode 5 is in contact with the edge of the upper transparent conductive layer 1 of the electrochromic device, while the lower metallic conductive layer 52 of the novel dual-conductive-layer electrode 5 is in contact with the edge of the lower transparent conductive layer 1 of the electrochromic device.

In a preferred embodiment, considering the specific characteristics of the electrochromic device and the operability of the manufacturing process, the transparent conductive layers 1 on the upper and lower sides can be cut into interleaving sawtooth shapes. These edges make intermittent contact with the edges of the novel dual-conductive-layer electrode 5. At least one edge of the transparent conductive layer 1 that contacts the novel dual-conductive-layer electrode 5 is shaped into a sawtooth pattern, forming intermittent contact with the novel dual-conductive-layer electrode 5. That is, the novel dual-conductive-layer electrode 5 has one or more segmented positions where it does not contact the edge of the transparent conductive layer 1.

There are a plurality of methods to ensure that the edge of the transparent conductive layer of the electrochromic device does not contact the novel dual-conductive-layer electrode 5.

At least one edge of the transparent conductive layer 1 that contacts the novel dual-conductive-layer electrode 5 is intermittently covered with an insulating layer, enabling intermittent contact between the transparent conductive layer 1 and the novel dual-conductive-layer electrode 5.

In one embodiment, the edge of the conductive layer is covered with an insulating layer 51, such that the novel dual-conductive-layer electrode 5 does not contact the transparent conductive layer in this section. Alternatively, in areas where conductivity is not required, the edge of the transparent conductive layer 1 can be directly cut off, forming a segmented edge conductive layer. Notably, for segmented edge conductive layers, no additional isolation zones are required between adjacent upper and lower edge conductive layers to prevent leakage or short circuits between the upper and lower conductive layer edges. In this embodiment, the insulating layers on the same side of the upper and lower transparent conductive layers 1 can be arranged in different configurations based on specific requirements, such as interleaved, fully overlapping, or partially overlapping.

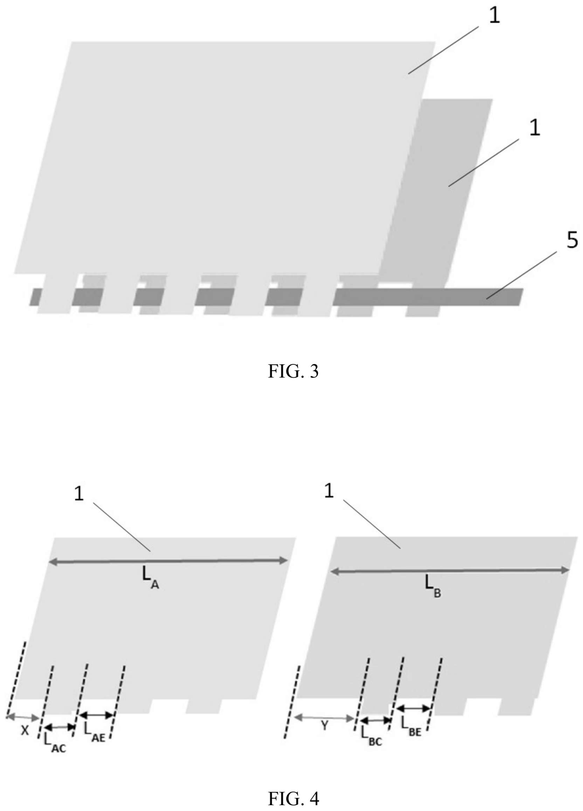

As shown in FIG. 4, in one embodiment, the side lengths of the upper and lower transparent conductive layers 1 of the electrochromic device are denoted as LA and LB, respectively. The protruding sections of the interleaved sawtooth-shaped edges of the upper and lower transparent conductive layers 1 are denoted as LAC and LBC, respectively. These sections form the conductive segments of the segmented edge conductive layers, which contact the upper and lower metallic conductive layers 52 of the novel dual-conductive-layer electrode 5. The recessed sections of the interleaved sawtooth-shaped edges, LAE and LBE, constitute the non-conductive segments of the segmented edge conductive layers. In FIG. 4, X and Y are used to adjust the starting positions of the segmented edge conductive layers of the upper and lower transparent conductive layers 1. It can thus be seen that whether the segmented edge of the upper transparent conductive layer 1 overlaps with the segmented edge of the lower transparent conductive layer, as well as the extent of overlap, is determined by the dimensions of X, Y, LAC, LAE, LBC, and LBE.

For a specific segmented edge conductive layer, the number of segments on the edge of the upper transparent conductive layer 1 is denoted as m, and can be expressed as: L_{AC1}, LAE1, LAC2, LAE2, ..., LACi, LAEi, ..., LACm, LAEm, where LACi represents the i-th conductive segment on the edge of the upper conductive layer, and LAEi represents the i-th non-conductive segment on the edge of the upper conductive layer. Similarly, the number of segments on the edge of the lower transparent conductive layer (1) is denoted as n, and can be expressed as: LBC1, LBE1, LBC2, LBE2, ..., LBCi, LBEi, ..., LBCn, LBEn, where LBCi represents the i-th conductive segment on the edge of the lower conductive layer, and LBEi represents the i-th non-conductive segment on the edge of the lower conductive layer. The starting structure of the edge of each transparent conductive layer (1) is determined by the dimensions of X, Y, LAC1, LAE1, LBC1, and LBE1. Similarly, the ending structure of the edge is determined by the dimensions of LACm, LAEm, LBCn, and LBEn. The number of segments on the edges of the upper and lower transparent conductive layers (1) can be equal (m = n) or unequal (m ≠ n). For any two segments (i, j) on the segmented edge conductive layer of the upper layer: the lengths of the conductive segments can be equal (LACi = LACj) or unequal (LACi ≠ LACj); the lengths of the non-conductive segments can be equal (LAEi = LAEj) or unequal (LAEi ≠ LAEj). Similarly, for any two segments (i, j) on the segmented edge conductive layer of the lower layer: the lengths of the conductive segments can be equal (LBCi = LBCj) or unequal (LBCi ≠ LBCj); the lengths of the non-conductive segments can be equal (LBEi = LBEj) or unequal (LBEi ≠ LBEj).

Based on the specific requirements of the electrochromic device, the structure of the electrochromic device is explained as follows:
the sawtooth patterns on the same side of the upper and lower transparent conductive layers 1 are arranged in an interleaved configuration.

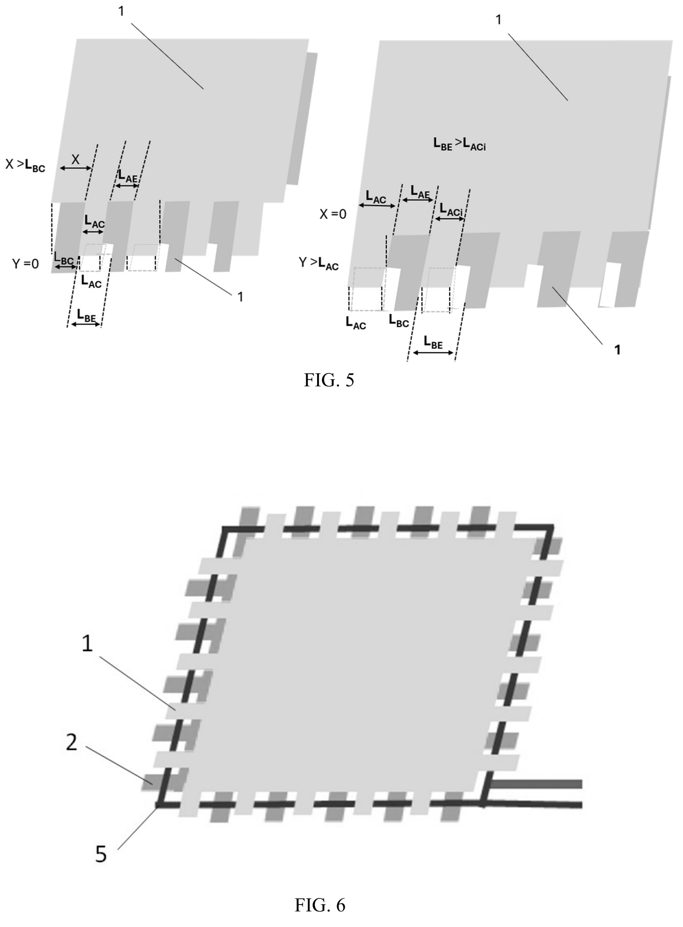

As shown in FIG. 5, in one embodiment, the segmented edge conductive layers on the upper and lower sides are completely non-overlapping. FIG. 5 illustrates the structures under the following conditions: when Y = 0, X > LBC, LBCi < LAEi, and LACi < LBEi or when X = 0, Y > LAC, LBCi < LAEi, and LACi < LBEi.

The segmented edge conductive layers on the upper and lower sides are interleaved and do not overlap. The novel dual-conductive-layer electrode 5 can be easily and conveniently inserted between the segmented edge conductive layers on the upper and lower sides, providing current to the electrochromic device.

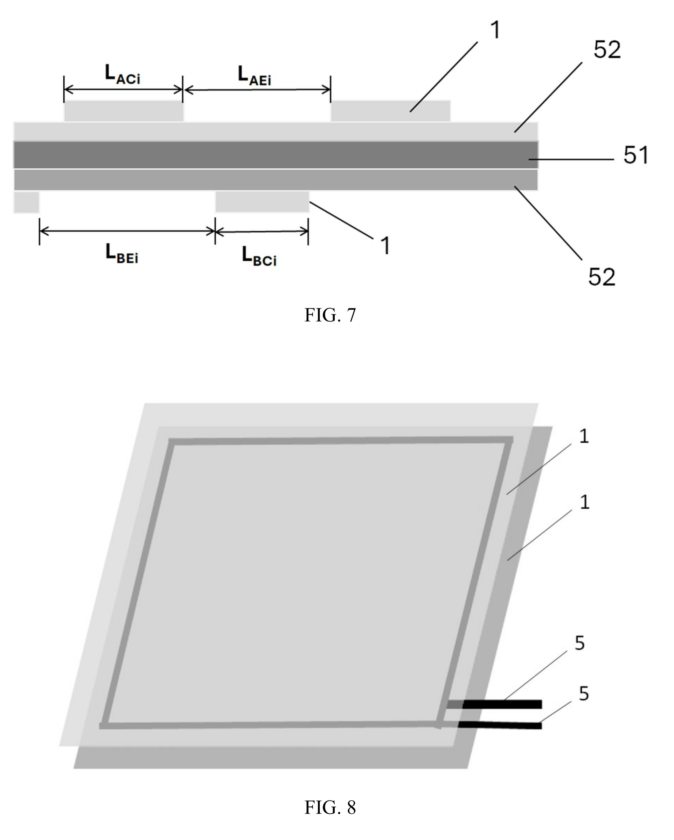

As shown in FIG. 6, in one embodiment, the segmented edge conductive layers on the upper and lower sides are interleaved and do not overlap. FIG. 7 illustrates the distribution method of the novel dual-conductive-layer electrode 5 under these conditions. The novel dual-conductive-layer electrode 5 surrounds the entire perimeter of the device. The upper metallic conductive layer 52 of the novel dual-conductive-layer electrode 5 is in contact with the segmented edge conductive layer on the upper side of the electrochromic device, while the lower metallic conductive layer 52 is in contact with the segmented edge conductive layer on the lower side of the electrochromic device. Each of the upper and lower metallic conductive layers 52 of the novel dual-conductive-layer electrode 5 is connected to the power controller via a separate wire.

For the segmented edge conductive layers, any segment i satisfies the conditions LBCi < LAEi and LACi < LBEi.

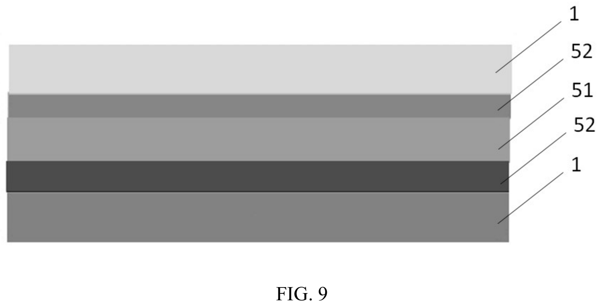

As shown in FIG. 8, in one embodiment, the transparent conductive layers (1) on the upper and lower sides are fully overlapping without segmented edges. In this case, X = Y = 0, LAC = LA, LBC = LB, and LAE = LBE = 0. The novel dual-conductive-layer electrode 5 surrounds the entire perimeter of the device and is sandwiched between the upper and lower transparent conductive layers 1 along their edges. The distribution method of the novel dual-conductive-layer electrode 5 in this case is shown in FIG. 9.

The sawtooth patterns on the same side of the upper and lower transparent conductive layers 1 are arranged in a fully overlapping configuration.

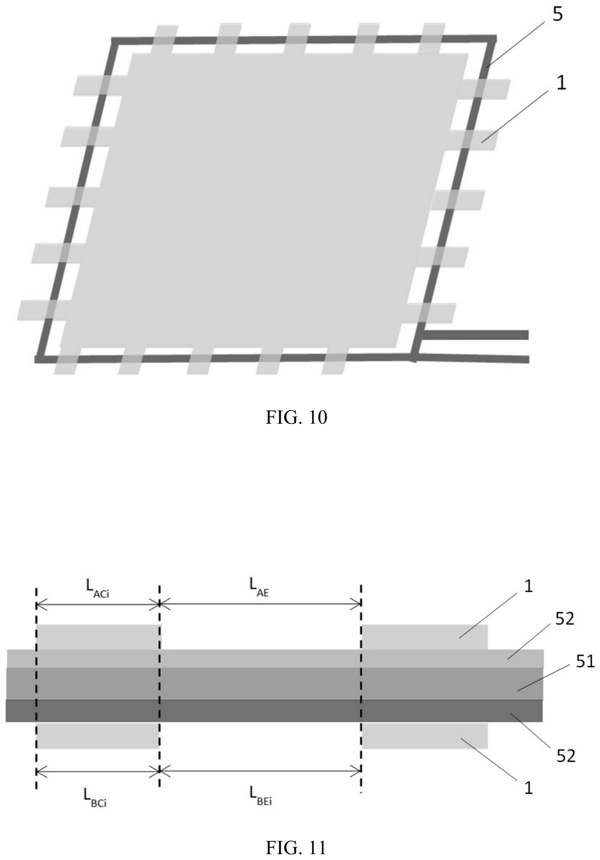

As shown in FIG. 10, in one embodiment, the transparent conductive layers l on the upper and lower sides have segmented edges that completely overlap. In this case, X = Y, LACi = LBCi, and LAEi = LBEi. The novel dual-conductive-layer electrode 5 surrounds the entire perimeter of the device and is sandwiched between the upper and lower transparent conductive layers 1 along their edges. The distribution method of the novel dual-conductive-layer electrode 5 in this case is shown in FIG. 11.

The sawtooth patterns on the same side of the upper and lower transparent conductive layers 1 are partially overlapping.

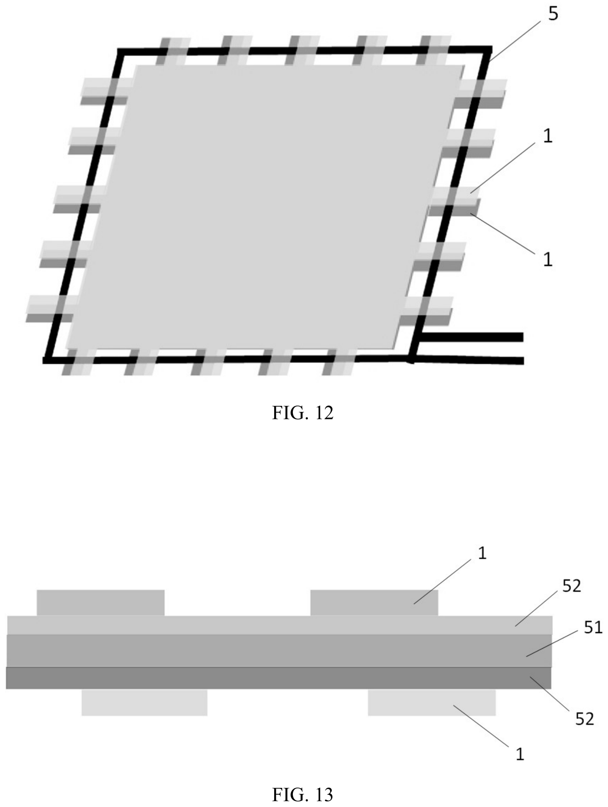

As shown in FIG. 12, in one embodiment, the transparent conductive layers (1) on the upper and lower sides have segmented edges, and the segmented edges are partially overlapping. The novel dual-conductive-layer electrode 5 surrounds the entire perimeter of the device and is sandwiched between the upper and lower transparent conductive layers 1 along their edges. The distribution method of the novel dual-conductive-layer electrode 5 in this case is shown in FIG. 13.

FIG. 12 is merely an illustrative diagram of a segmented edge conductive layer where the segmented edges of the upper and lower transparent conductive layers 1 are partially overlapping. The overlapping length between the segmented edge of the upper transparent conductive layer 1 and the segmented edge of the lower transparent conductive layer 1 is determined by the dimensions of X, Y, LAC, LAE, LBC, and LBE. Based on the specific requirements of the device, the interleaved and overlapping design of the upper and lower transparent conductive layers 1 is defined by the dimensions of X, Y, LACi, LAEi, LBCi, and LBEi, where i represents any segment. The lengths of these segments can be equal or unequal. Furthermore, depending on the device's requirements, in some areas, the segmented edges may not overlap at all; in other areas, the segmented edges may fully overlap. In certain areas, the segmented edges may partially overlap. The design of the segmented edge conductive layer can be any combination of these four configurations, tailored to meet the functional needs of the device.

According to the characteristics and functional requirements of the device, any changes to the edge structure distribution of the upper and lower transparent conductive layers will not affect the assembly of the device using the "dual-conductive-layer electrode" described in this invention.

In this invention, the material of the transparent conductive layer 1 includes, but is not limited to, indium tin oxide (ITO) and indium zinc oxide (IZO). The material can be flexibly selected based on the specific needs and characteristics of different materials.

In addition to the device structure described above, the present invention further provides a method for manufacturing an electrochromic apparatus. The method comprises forming a first transparent conductive layer on a suitable substrate using known deposition techniques, such as sputtering, evaporation, or chemical vapor deposition (CVD). The transparent conductive layer may be made from materials such as indium tin oxide (ITO), indium zinc oxide (IZO), or other suitable transparent conductors.

Subsequently, a charge storage layer, an electrolyte layer, and an electrochromic layer are sequentially deposited over the first transparent conductive layer. These layers may be applied using methods appropriate for the materials involved, such as solution coating, vacuum deposition, or spin coating. The thickness, uniformity, and sequence of these layers can be adjusted based on the desired electrochromic performance.

A second transparent conductive layer is then formed over the electrochromic layer, thereby completing the layered electrochromic stack. Like the first conductive layer, the second transparent conductive layer may be formed using a deposition technique suitable for the selected transparent conductive material.

After the electrochromic stack is assembled, a dual-conductive-layer electrode is prepared and attached to one or more peripheral edges of the stack. The dual-conductive-layer electrode is constructed by placing an insulating layer at a central portion and laminating or depositing a metallic conductive layer on each of its upper and lower sides. The insulating layer may be a polymer or dielectric film, while the metallic conductive layers may be copper foil, aluminum, or other conductive metals. The outer surfaces of the metallic conductive layers may be coated with a conductive adhesive, such as silver paste or a conductive epoxy, to facilitate reliable electrical connection to the transparent conductive layers.

In one embodiment, the method includes shaping the edges of the first and second transparent conductive layers into sawtooth or segmented patterns before or after deposition. This segmentation may be achieved through photolithography, laser ablation, mechanical cutting, or etching. The segments may be configured to form interleaved or overlapping patterns between the upper and lower transparent conductive layers, thereby enabling customized electrical contact and current distribution.

During assembly, the dual-conductive-layer electrode is configured and positioned such that one of its metallic conductive layers contacts the segmented or shaped edge of the first transparent conductive layer, and the other metallic conductive layer contacts the second transparent conductive layer. In one embodiment, the dual-conductive-layer electrode is attached continuously along the entire perimeter of the electrochromic stack, thereby reducing the need for multiple single-layer electrodes and simplifying the wiring process.

In another embodiment, each of the two metallic conductive layers of the dual-conductive-layer electrode is connected to a power controller through separate electrical wires. This enables independent voltage control of the upper and lower transparent conductive layers, which can improve switching efficiency and uniformity of the electrochromic response.

In the description of this invention, it should be understood that directional terms such as "front, back, up, down, left, right," "horizontal, vertical, perpendicular," "top, bottom," and similar terms indicating orientation or positional relationships are generally based on the orientation or positional relationships shown in the accompanying figures. These terms are provided merely for ease of description and to simplify the explanation. Unless otherwise specified, these directional terms do not imply or suggest that the referenced devices or components must have specific orientations or be constructed and operated in specific orientations, and therefore should not be construed as limiting the scope of the invention. The terms "inner" and "outer" refer to the relative position of the components with respect to their own contours.

For ease of description, spatial relative terms such as "above," "over," "on top of," "upper," etc., may be used here to describe the spatial positional relationships of one device or feature relative to another device or feature as shown in the figures. It should be understood that these spatial relative terms are intended to encompass different orientations during use or operation beyond those described in the figures. For example, if a device in the figures is inverted, a device described as "above" or "on top of" another device or structure would then be positioned "below" or "underneath" the other device or structure. Thus, the exemplary term "above" may include both "above" and "below." The device may also be positioned in other orientations (e.g., rotated 90 degrees or placed in another position), and the spatial relative descriptions used here should be interpreted accordingly.

Additionally, it should be noted that terms such as "first" and "second" are used to identify components solely for the purpose of distinguishing between them. Unless otherwise specified, these terms carry no special meaning and should not be construed as limiting the scope of protection of this invention.

The above description is merely a preferred embodiment of the present invention and is not intended to limit the invention. For those skilled in the art, various modifications and changes can be made to the invention. Any modifications, equivalent replacements, improvements, and the like made within the spirit and principles of the present invention shall fall within the scope of protection of this invention.

## Claims

1. An electrochromic apparatus, comprising:
a pair of transparent conductive layers disposed respectively on an upper side and a lower side of an electrochromic device;
a charge storage layer, an electrolyte layer, and an electrochromic layer, positioned between the pair of transparent conductive layers and arranged sequentially from top to bottom; and
a dual-conductive-layer electrode positioned along one or more edges of the electrochromic device and connected to the pair of transparent conductive layers;
wherein the dual-conductive-layer electrode comprises:
an insulating layer and a pair of metallic conductive layers, wherein
the insulating layer is positioned at a central portion of the dual-conductive-layer electrode to provide insulation; and
the pair of metallic conductive layers are disposed respectively on an upper side and a lower side of the insulating layer.

2. The electrochromic apparatus according to claim 1, wherein the pair of metallic conductive layers of the dual-conductive-layer electrode have sides facing away from each other, and each of the sides is covered with metallic conductive adhesive,
optionally wherein a conductive surface of the transparent conductive layer on the upper side of the electrochromic device faces downward, and a conductive surface of the transparent conductive layer on the lower side of the electrochromic device faces upward.

3. The electrochromic apparatus according to any one of the preceding claims, wherein at least one edge of the pair of transparent conductive layers that contacts with the dual-conductive-layer electrode is in a sawtooth pattern making intermittent contact with the dual-conductive-layer electrode.

4. The electrochromic apparatus according to claim 3, wherein edges in the sawtooth pattern on a same side of the pair of transparent conductive layers are arranged in an interleaved configuration.

5. The electrochromic apparatus according to claim 4, wherein the edges in the sawtooth pattern on a same side of the pair of transparent conductive layers have overlapping portions.

6. The electrochromic apparatus according to any one of claims 3 to 5, wherein the sawtooth pattern comprises alternating conductive segments and non-conductive segments along the at least one edge of the pair of transparent conductive layers,
optionally wherein lengths of the conductive segments and the non-conductive segments are variable.

7. The electrochromic apparatus according to claim 6, wherein the edges on the same side of the pair of transparent conductive layers are completely overlapping or partially overlapping.

8. The electrochromic apparatus according to any one of the preceding claims, wherein the dual-conductive-layer electrode surrounds an entire perimeter of the electrochromic apparatus.

9. The electrochromic apparatus according to any one of the preceding claims, wherein each of the pair of metallic conductive layers of the dual-conductive-layer electrode is connected to a power controller through a separate electrical connection.

10. The electrochromic apparatus according to any one the preceding claims, wherein the electrochromic apparatus is integrated into a smart window, a display panel, a rear-view mirror, or a light-modulating device.

11. A method for manufacturing an electrochromic apparatus, comprising:
forming a first transparent conductive layer;
depositing a charge storage layer, an electrolyte layer, and an electrochromic layer over the first transparent conductive layer;
forming a second transparent conductive layer over the electrochromic layer to define a layered electrochromic stack; and
attaching a dual-conductive-layer electrode to one or more edges of the layered electrochromic stack, the dual-conductive-layer electrode comprising:
an insulating layer positioned at a central portion; and
a pair of metallic conductive layers disposed respectively on an upper side and a lower side of the insulating layer.

12. The method of claim 11, further comprising:
applying a metallic conductive adhesive to outer surfaces of the pair of metallic conductive layers.

13. The method of claim 11 or 12, further comprising:
shaping at least one edge of the first and second transparent conductive layers into sawtooth patterns configured to make intermittent contact with the dual-conductive-layer electrode,
optionally wherein the sawtooth patterns on the first and second transparent conductive layers are arranged in an interleaved configuration such that conductive segments of one transparent conductive layer are positioned opposite non-conductive segments of the other transparent conductive layer.

14. The method of any one of claims 11 to 13, further comprising:
connecting each of the pair of metallic conductive layers of the dual-conductive-layer electrode to a power controller through separate electrical wires.

15. The method of any one of claims 11 to 14, wherein the attaching the dual-conductive-layer electrode comprises:
configuring the dual-conductive-layer electrode to surround an entire perimeter of the layered electrochromic stack.
